# EUROPEAN PATENT APPLICATION

(11) **EP 4 693 613 A2**
(43) Date of publication of application: **11.02.2026**
(21) Application number: 25187199.2
(22) Date of filing: 03.07.2025
(51) Int. Cl.: H01M 10/613, H01M 10/625, H01M 10/6556, H01M 50/209, H01M 50/271, H01M 50/507

(54) **BATTERY PACK**

(30) Priority: 09.08.2024 JP 2024134549
(71) Applicant: TOYOTA JIDOSHA KABUSHIKI KAISHA, Toyota-shi, Aichi-ken 471-8571 (JP)
(72) Inventor: MATSUSHITA, Taro, Toyota-shi, 471-8571 (JP); ISHIKAWA, Hiroaki, Toyota-shi, 471-8571 (JP)
(74) Representative: TBK

(57) **Abstract**

A battery pack (20) that may improve cooling efficiency. The battery pack (20) includes plural battery cells (30) that each include a positive electrode terminal (30A) and a negative electrode terminal (30B), a battery case (22) that accommodates the plural battery cells (30), a lid part (24) that is formed of an insulator and provided at the battery case (22), and bus bars (26). The bus bars (26) each include a main body portion (26A) embedded in the lid part (24), and connection terminals (26B) provided at end portions of the main body portion (26A). The connection terminals (26B) are exposed from an inner face of the lid part (24) that opposes the plural battery cells (30), and are electrically connected with the positive electrode terminals (30A) and negative electrode terminals (30B) of the plural battery cells (30). An outer face of the lid part (24) is in contact with a cooler (18).

## Description

### BACKGROUND

### Technical Field

The present disclosure relates to a battery pack.

### Related Art

As disclosed in, for example, Japanese Patent Application Laid-Open (JP-A) No. 2023-126533, a battery pack has been known since heretofore that includes a pack case, which is provided with a pack tray and a pack cover, and a heat sink. The pack tray supports a lower portion of a battery module. The pack cover is provided so as to cover the battery module and be in contact with an upper end face of the battery module. The heat sink is attached to an upper portion of the pack cover.

However, in this battery pack, because the heat sink is in contact with the pack cover which is a separate body from a bus bar, distances between the heat sink and the bus bar and battery module are far, lowering cooling efficiency for the bus bar and battery module.

Accordingly, the present disclosure provides a battery pack that may improve cooling efficiency.

### SUMMARY

A battery pack according to a first aspect of the present disclosure includes: plural battery cells or plural battery modules, each battery cell or battery module including a positive electrode terminal and a negative electrode terminal; a battery case accommodating the plural battery cells or plural battery modules; a lid part formed of an insulator and provided at the battery case; and a bus bar including a main body portion embedded in the lid part, and connection terminals that are provided at end portions of the main body portion, that are exposed from an inner face of the lid part that opposes the plural battery cells or plural battery modules, and that are electrically connected with a positive electrode terminal and a negative electrode terminal of the plural battery cells or plural battery modules. An outer face of the lid part is in contact with a cooler.

According to the first aspect, the plural battery cells or plural battery modules with the positive electrode terminals and negative electrode terminals are accommodated in the battery case, and the lid part formed of the insulator is provided at the battery case. The main body portions of the bus bars are embedded in the lid part.

The connection terminals provided at the end portions of the main body portions of the bus bars are exposed from the inner face of the lid part that opposes the plural battery cells or plural battery modules, and the connection terminals are electrically connected to the positive electrode terminals and negative electrode terminals of the plural battery cells or plural battery modules. The outer face of the lid part is put into contact with the cooler.

Thus, according to the first aspect, because each bus bar is embedded in the lid part of the battery case, heat exchange with the cooler may be conducted efficiently. As a result, cooling efficiency of the battery pack is improved compared to a structure in which the lid part of the battery case and the bus bar are separate bodies.

In a battery pack according to a second aspect relating to the first aspect, in the battery pack according to the first aspect, the connection terminals of the bus bar are electrically connected to the positive electrode terminal and negative electrode terminal via respective bonding tabs, and the connection terminals are formed so as not to extend outside the bonding tabs.

According to the second aspect, the connection terminals of each bus bar are electrically connected to a positive electrode terminal and a negative electrode terminal of the plural battery cells or plural battery modules via the respective bonding tabs, and the connection terminals are formed with sizes that do not project beyond the bonding tabs. Therefore, insulation between the connection terminals of the plural battery cells or plural battery modules is more excellently assured than in a structure in which connection terminals of a bus bar extend outside bonding tabs.

In a battery pack according to a third aspect relating to the first aspect, in the battery pack according to the first aspect or the second aspect, the main body portion of the bus bar embedded in the lid part is separated from an outer face of the lid part and side faces of the lid part by at least twice a thickness of the main body portion.

According to the third aspect, the main body portion of each bus bar embedded in the lid part is separated from the outer face of the lid part and the side faces of the lid part by at least twice the thickness of the main body portion. Therefore, insulation between the connection terminals of the plural battery cells or plural battery modules is more excellently assured than in a structure in which a main body portion is separated from an outer face of a lid part or a side face of the lid part only by around the thickness of that main body portion.

In a battery pack according to a fourth aspect relating to the first aspect, the battery pack according to any one of the first to third aspects further includes a heat conducting member provided at the inner face of the lid part except at locations where the connection terminals are exposed, the heat conducting member being in contact with the plural battery cells or plural battery modules.

According to the fourth aspect, the heat conducting member that is in contact with the plural battery cells or plural battery modules is provided at the inner face of the lid part, except at the locations at which the connection terminals are exposed. Therefore, heat dissipation from the plural battery cells or plural battery modules is improved compared to a structure in which no heat conducting member in contact with the plural battery cells or plural battery modules is provided at the inner face of the lid part.

**In** a battery pack according to a fifth aspect relating to the first aspect, in the battery pack according to any one of the first to fourth aspects, the lid part includes: a lid part main body including the inner face that opposes the plural battery cells or plural battery modules; and an exterior portion formed of a high-strength material with higher strength than the lid part main body, the exterior portion covering at least one face of a plurality of faces of the lid part main body excluding the inner face.

According to the fifth aspect, the lid part is structured by the lid part main body that includes the inner face opposing the plural battery cells or plural battery modules, and the exterior portion that is formed of the high-strength material with higher strength than the lid portion main body and that covers at least one face of a plurality of faces of the lid part main body except for the inner face. Therefore, rigidity of the lid part is improved and warping of the lid part is suppressed or prevented.

A battery pack according to a sixth aspect relating to the first aspect includes: plural battery cells or plural battery modules, each battery cell or battery module including a positive electrode terminal and a negative electrode terminal; a battery case accommodating the plural battery cells or plural battery modules; a lid part formed of an insulator and provided at the battery case; and a bus bar including a main body portion embedded in the lid part, and connection terminals that are provided at end portions of the main body portion and embedded in the lid part, at least portions of the connection terminals being exposed by hole portions formed in the lid part. A positive electrode terminal and a negative electrode terminal of the plural battery cells or plural battery modules are inserted into the hole portions and electrically connected with the connection terminals, and an outer face of the lid part is in contact with a cooler.

According to the sixth aspect, the plural battery cells or plural battery modules with the positive electrode terminals and negative electrode terminals are accommodated in the battery case, and the lid part formed of the insulator is provided at the battery case. The main body portion of each bus bar is embedded in the lid part. The connection terminals provided at the end portions of the main body portion of the bus bar are embedded in the lid part and at least portions of the connection terminals are exposed by the hole portions formed in the lid part. The positive electrode terminals and negative electrode terminals of the plural battery cells or plural battery modules are inserted into the hole portions and electrically connected to the connection terminals. The outer face of the lid part is put into contact with the cooler.

Thus, according to the sixth aspect, because the bus bar is embedded in the lid part of the battery case, heat exchange with the cooler may be conducted efficiently. As a result, cooling efficiency of the battery pack is improved compared to a structure in which the lid part of the battery case and the bus bar are separate bodies.

In a battery pack according to a seventh aspect relating to the present disclosure, in the battery pack according to any one of the first to sixth aspects, the outer face of the lid part is in contact with the cooler over an entire area of the outer face.

According to the seventh aspect, an entire area of the outer face of the lid part is in contact with the cooler. As a result, the cooling efficiency of the battery pack is improved compared to a structure in which only some of the outer face of the lid part is in contact with the cooler.

According to the present disclosure, as described above, cooling efficiency of a battery pack may be improved.

### BRIEF DESCRIPTION OF THE DRAWINGS

Exemplary embodiments of the present invention will be described in detail based on the following figures, wherein:
Fig. 1 is a schematic elevation view showing installation structures of a battery pack according to a first exemplary embodiment;
Fig. 2 is a schematic elevation view showing internal structures of the battery pack according to the first exemplary embodiment;
Fig. 3 is a schematic bottom view showing an inner face of a lid part of the battery pack according to the first exemplary embodiment;
Fig. 4 is a schematic sectional diagram cut along line X-X in Fig. 3;
Fig. 5 is a schematic perspective view showing a battery cell of the battery pack according to the first exemplary embodiment;
Fig. 6 is a schematic bottom view showing internal structures of the battery pack according to the first exemplary embodiment;
Fig. 7 is a schematic bottom view showing an inner face of a lid part of a battery pack according to a second exemplary embodiment;
Fig. 8 is a schematic elevation view showing internal structures of a battery pack according to a third exemplary embodiment;
Fig. 9 is a schematic elevation view showing internal structures of a battery pack according to a fourth exemplary embodiment;
Fig. 10 is a schematic elevation view showing internal structures of a battery pack according to a fifth exemplary embodiment;
Fig. 11 is a schematic elevation view showing internal structures of a battery pack according to a sixth exemplary embodiment;
Fig. 12A is a schematic elevation view showing internal structures of a battery pack according to a seventh exemplary embodiment; and
Fig. 12B is a schematic sectional diagram cut along line Y-Y in Fig. 12A.

### DETAILED DESCRIPTION

Below, exemplary embodiments relating to the present disclosure are described in detail in accordance with the drawings. For convenience of description, the arrow UP that is shown where appropriate in the drawings indicates a vehicle upper direction, the arrow FR indicates a vehicle front direction, and the arrow RH indicates a vehicle right direction. Where the directions upper, lower, front, rear, left and right are used below without being particularly specified, the same represent upper, lower, front, rear, left and right of the vehicle. The left-and-right direction is the same as the vehicle width direction.

### = First Exemplary Embodiment =

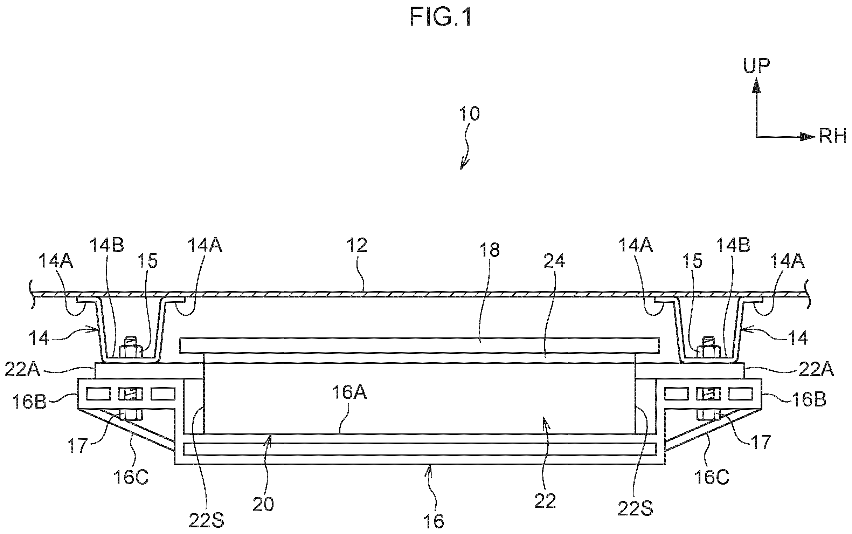

First, a first exemplary embodiment is described. As shown in Fig. 1, a substantially flat board-shaped floor 12 is provided at a vehicle 10 such as an electric car or the like, and a substantially flat board-shaped cooler 18 is disposed at the lower side of the floor 12. A battery pack 20 according to the first exemplary embodiment is disposed at the lower side of the cooler 18 installed at the vehicle 10.

To describe this more specifically, a left and right pair of side members 14 are provided at the lower face of the floor 12, at vehicle width direction outer sides relative to the cooler 18. Elevation view cross sections of the side members 14 are formed substantially in hat shapes. That is, flange portions 14A are integrally formed at upper end portions of each side member 14. The flange portions 14A project to the vehicle width direction outer side and the vehicle width direction inner side of each side member 14. The flange portions 14A are attached to the lower face of the floor 12 by being joined by welding or the like.

Penetrating holes (not shown in the drawings) for bolt insertion are formed in a vehicle width direction middle portion of a lower end portion 14B of each side member 14. The penetrating holes are formed plurally in a row in the front-and-rear direction. Plural weld nuts 15 are provided at an upper face of the lower end portion 14B to be coaxial with the penetrating holes. A platform 16 that supports the battery pack 20 from the lower side thereof is provided at the vehicle 10.

The platform 16 includes a flat board portion 16A with a predetermined thickness and projecting portions 16B with predetermined thicknesses. The battery pack 20 is placed on the flat board portion 16A. The projecting portions 16B are formed integrally with two vehicle width direction outer side end portions of the flat board portion 16A. Each projecting portion 16B projects substantially in an inverted "L" shape to the upper side in elevation view. Penetrating holes (not shown in the drawings) for bolt insertion are formed in a vehicle width direction middle portion of the projecting portion 16B. The penetrating holes are formed plurally in a row in the front-and-rear direction.

Lower end portions of support members 16C are attached to lower portions of left and right side faces of the flat board portion 16A that face to the vehicle width direction outer sides. An upper end portion of each support member 16C is attached to a vehicle width direction outer side end portion of the lower face of the projecting portion 16B. Thus, a vehicle width direction outer side end portion of each projecting portion 16B is supported at the flat board portion 16A via the support member 16C.

The battery pack 20 includes a battery case 22, which is described below. Flange portions 22A (shown only in Fig. 1) project to the respective vehicle width direction outer sides of the battery pack 20. The flange portions 22A are formed integrally with left and right side walls 22S of the battery case 22 that face to the vehicle width direction outer sides. Each flange portion 22A is formed at a height position at which, when the battery case 22 (the battery pack 20) is placed on the flat board portion 16A, a lower face of the flange portion 22A overlaps with an upper face of the projecting portion 16B from the upper side. Penetrating holes (not shown in the drawings) for bolt insertion are formed in the flange portion 22A. The penetrating holes are formed plurally in a row in the front-and-rear direction.

Thus, in this structure, the battery pack 20 (the battery case 22) is placed on the flat board portion 16A and the platform 16 supports the flange portions 22A at the projecting portions 16B, and the platform 16 is attached to the left and right side members 14 by the upper faces of the flange portions 22A being put into contact with the lower faces of the lower end portions 14B of the side members 14, plural bolts 17 being inserted into the penetrating holes from the lower sides of the projecting portions 16B, and the bolts 17 being screwed into the weld nuts 15.

As a result, an upper face (outer face) of a lid part 24 of the battery pack 20, which lid part 24 is described below, is in contact with the cooler 18 over an entire area of the upper face under a predetermined pressure force from the lower side. Battery cells 30 are accommodated in the battery case 22. Of surfaces of the lid part 24, a surface that faces to the side of the lid part 24 at which the battery cells 30 are disposed is referred to as an inner face, and a surface that faces to the opposite side from the inner face is referred to as an outer face. The upper face is generally the outer face but this is not a limitation.

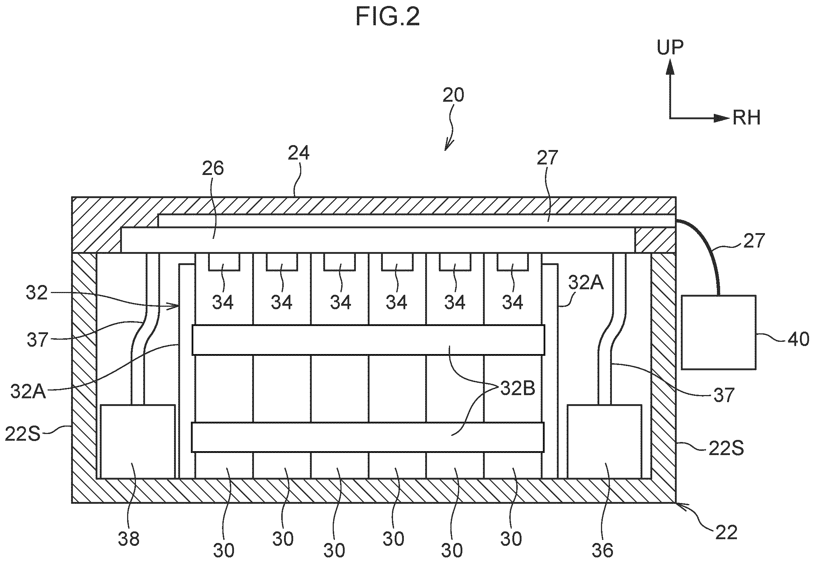

As shown in Fig. 2, the battery pack 20 includes the battery case 22 and the lid part 24. The battery case 22 has a case shape in which side walls (including the left and right side walls 22S) with predetermined heights stand integrally from edge portions of a substantially rectangular flat board-shaped bottom wall, whose longer direction is in the vehicle width direction, and the upper side of the case shape is open. The lid part 24 has a rectangular flat board shape that closes off the open portion at the upper side of the battery case 22. The meaning of the term "closes off" for the lid part 24 as used herein is intended to include both a structure that completely closes off the opening portion of the battery case 22 and a structure that closes off only a portion of the opening portion of the battery case 22.

The battery case 22 is formed of an insulator (a resin material that is easy to mold integrally, for example, an engineering plastic such as a polyamide or the like). A plural number of the battery cells 30 (six are shown in Fig. 2 for convenience) are accommodated inside the battery case 22. Each battery cell 30 has a positive electrode terminal 30A and a negative electrode terminal 30B.

The plural battery cells 30 are arranged in a row with thickness directions thereof in the longer direction of the battery case 22 (the vehicle width direction). The battery cells 30 are restrained by a restraint apparatus 32. The restraint apparatus 32 includes flat plate-shaped restraint plates 32A and a front and rear pair of restraint bands 32B. The restraint plates 32A are disposed at both of length direction end portion sides of the battery case 22 and are superposed with both of end portion sides of the battery cells 30. The restraint bands 32B extend in the longer direction of the battery case 22, integrally connect together upper portions of the restraint plates 32A, and integrally connect together lower portions of the restraint plates 32A.

The lid part 24 is formed of an insulator (preferably the same resin material as the battery case 22 in order to match thermal expansion characteristics). As shown in Fig. 2 to Fig. 4, main body portions 26A of bus bars 26 are embedded without gaps in the lid part 24. The main body portions 26A are not exposed to the outside. The bus bars 26 are fabricated of metal and, with a view to improving cooling characteristics, are preferably formed of copper, which has excellent electrical conductivity.

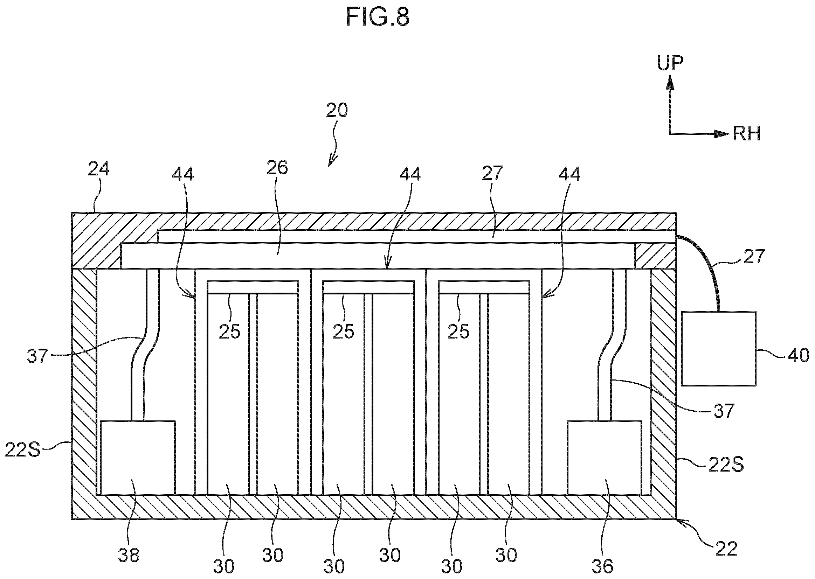

Connection terminals 26B are integrally provided at both end portions of the main body portion 26A of each bus bar 26. Lower faces of the connection terminals 26B are exposed through the inner face of the lid part 24, opposing the plural battery cells 30 in the vertical direction. In Fig. 2 and in Fig. 8 to Fig. 11, which are mentioned below, the connection terminals 26B are depicted with flat plate shapes for convenience.

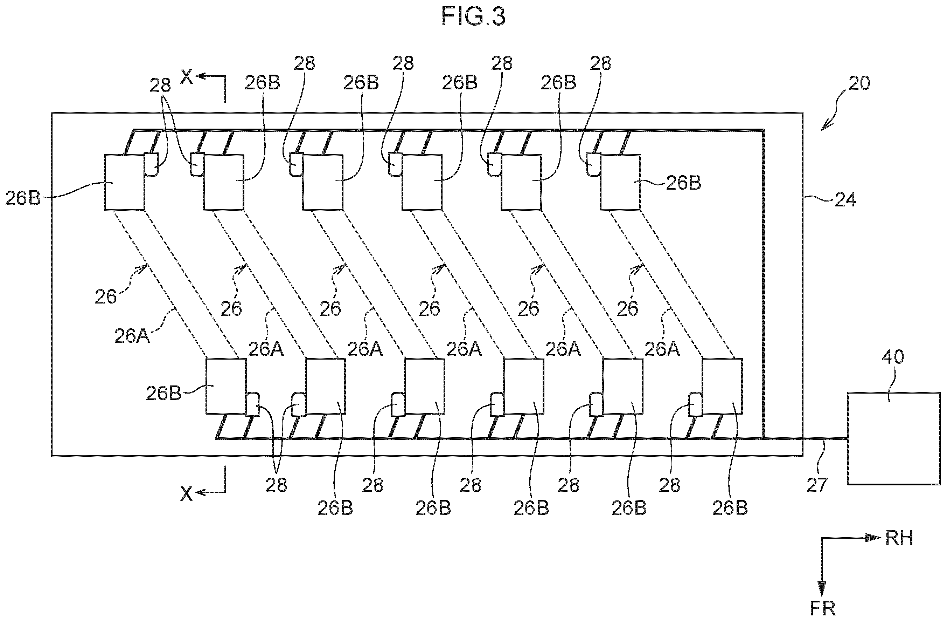

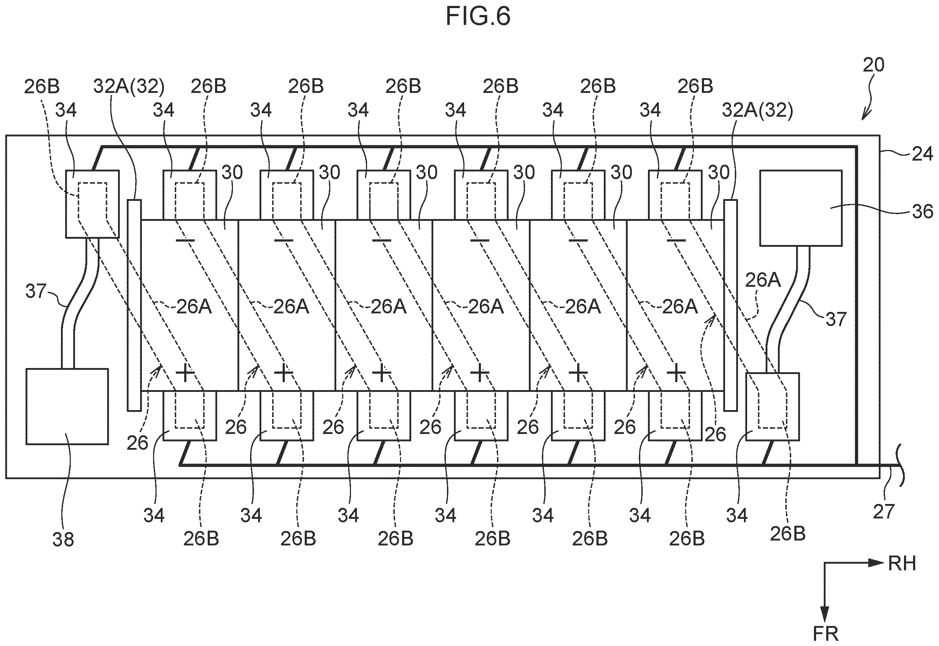

As shown in Fig. 3, the main body portion 26A of each bus bar 26 is embedded diagonally (inclined at a predetermined angle) with respect to the front-and-rear direction in bottom view (and in plan view). As shown in Fig. 6, the connection terminals 26B of each bus bar 26 are in respective contact with and electrically connected to the positive electrode terminal 30A of one of adjacent battery cells 30 and the negative electrode terminal 30B of the other of the adjacent battery cells 30. Thermostats 28, which are described below, are not depicted in Fig. 6.

A positive battery junction box 36 and a negative battery junction box 38 are electrically connected, via respective power cables 37 that are provided to be flexible, to end portions at the furthest upstream side and the furthest downstream side of a current path formed by the plural bus bars 26. The positive battery junction box 36 and the negative battery junction box 38 are disposed inside the battery case 22 (see Fig. 2 and Fig. 6).

As shown in Fig. 2, a detector (battery ECU) 40 is provided outside the battery pack 20. The detector 40 is for detecting voltages and temperatures of the connection terminals 26B of the bus bars 26. In order to accurately measure temperatures of the bus bars 26, the thermostats 28 are disposed in states of contact with the connection terminals 26B (see Fig. 3), and the connection terminals 26B and thermostats 28 are electrically connected with the detector 40 by a detection line 27. The detection line 27 and the thermostats 28 are also embedded in the lid part 24. A portion of the detection line 27 is fed out through a side wall of the lid part 24 for connection to the detector 40.

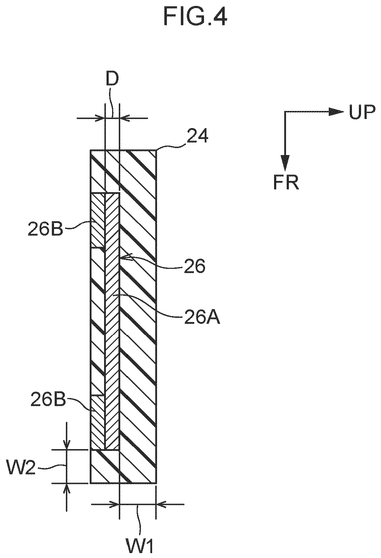

As shown in Fig. 4, the main body portions 26A of the bus bars 26 embedded in the lid part 24 are embedded at distances from the upper face (outer face) of the lid part 24 and side faces of the lid part 24 that are at least twice a thickness of the main body portions 26A (a plate thickness D). That is, a distance W1 from the upper face of the lid part 24 to the upper faces of the bus bars 26 and a distance W2 from a side face of the lid part 24 to a side face of the main body portions 26A are set to be at least twice the thickness of the main body portions 26A (the plate thickness D).

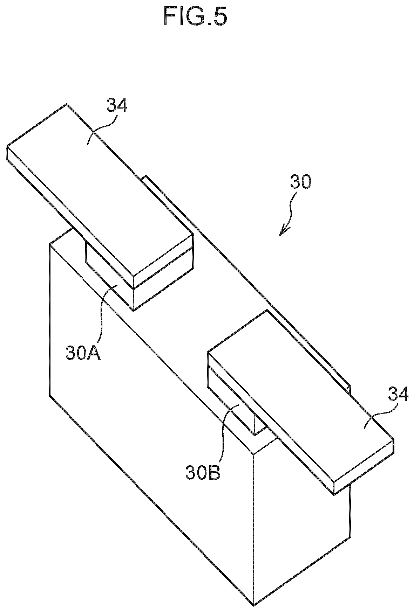

As shown in Fig. 5 and Fig. 6, the connection terminals 26B of the bus bars 26 are electrically connected to the positive electrode terminals 30A and negative electrode terminals 30B via respective bonding tabs 34. The bonding tabs 34 are also fabricated of metal and, with a view to improving cooling characteristics, are preferably formed of copper, which has excellent electrical conductivity.

Each bonding tab 34 is formed in a rectangular flat plate shape in plan view, with the longer direction in the front-and-rear direction. A size of the bonding tabs 34 is greater than a size of each positive electrode terminal 30A and each negative electrode terminal 30B. **In** other words, each positive electrode terminal 30A and negative electrode terminal 30B is formed with a size that does not extend outside the respective bonding tab 34.

With a view to assuring insulation between the positive electrode terminals 30A of adjacent battery cells 30 and between the negative electrode terminals 30B of adjacent battery cells 30, and insulation between the positive electrode terminal 30A and negative electrode terminal 30B of the same battery cell 30, it is preferable to provide spacings of at least 5 mm between the bonding tabs 34 (if insulating members are not provided).

Now, operation of the battery pack 20 according to the first exemplary embodiment structured as described above is described.

As described above, the plural battery cells 30 including the positive electrode terminals 30A and negative electrode terminals 30B are accommodated in the case-shaped battery case 22 formed of an insulator (a resin material). The opening portion of the battery case 22 is closed off by the lid part 24 formed of an insulator (a resin material).

The main body portions 26A of the bus bars 26 are embedded in the lid part 24, and the connection terminals 26B provided at both end portions of the main body portion 26A of each bus bar 26 are exposed from the inner face of the lid part 24 that opposes the plural battery cells 30. The connection terminals 26B are electrically connected with the positive electrode terminals 30A and negative electrode terminals 30B of adj acent pairs of the plural battery cells 30.

The upper face (outer face) of the lid part 24 is in contact with the cooler 18 installed at the vehicle 10 under a predetermined pressure force. Therefore, compared to a structure in which the lid part 24 of the battery case 22 and the bus bars 26 are separate bodies, thermal paths from the cooler 18 to the battery cells 30 may be made shorter, thermal resistance may be reduced, and the battery cells 30 may be more effectively cooled as a result. **In** other words, cooling efficiency of the battery pack 20 may be improved.

Furthermore, in comparison with a structure in which the lid part 24 of the battery case 22 and the bus bars 26 are separate bodies, surface areas of the bus bars 26 contacting the lid part 24 of the battery case 22 may be increased. As a result, the bus bars 26 may implement better heat exchange with the cooler 18 than heretofore, and the bus bars 26 and battery cells 30 may be cooled effectively. In other words, the cooling efficiency of the battery pack 20 may be improved.

In particular, because of the structure in which an entire area of the upper face of the lid part 24 is in contact with the cooler 18 under the predetermined pressure force, in contrast to a structure in which only some of the upper face of the lid part 24 is in contact with the cooler 18, the lid part 24 and the bus bars 26 embedded in the lid part 24 may be cooled directly and effectively, and the cooling efficiency of the battery pack 20 may be improved more effectively.

Because the battery case 22 and the lid part 24 are fabricated of resin, the battery pack 20 may be reduced in weight. Because, as mentioned above, an entire area of the upper face of the lid part 24 is in contact with the cooler 18 under the predetermined pressure force (that is, because the cooler 18 may be utilized as a reinforcing member), warping of the lid part 24 may be suppressed or prevented even though the lid part 24 is fabricated of resin. Even if thickness of the lid part 24 is reduced in order to further reduce weight, a deficiency of strength or deficiency of sealing may be suppressed or prevented.

Because the battery pack 20 is in contact with the cooler 18 from the lower side thereof, ease of mounting and removal of the battery pack 20 to and from the vehicle 10 may be improved. That is, because mounting or removal of the cooler 18 is not necessary when mounting or removing the battery pack 20, work time and workloads required for mounting and removal may be reduced.

Because the bus bars 26, the detection line 27 and the thermostats 28 are embedded in the lid part 24 and integrated with the lid part 24, a number of components may be reduced compared to a structure in which the bus bars 26, detection line 27 and thermostats 28 are separate from the lid part 24. That is, there is no need to provide connectors linking with the detection line 27 and the like inside the battery case 22. Thus, space for disposition of the detection line 27 is unnecessary and space may be saved inside the battery case 22.

Although not shown in the drawings, if the plural bus bars are wholly exposed from the inner face of the lid part 24, wide gaps must be provided between the battery cells 30 in order to assure insulation. In contrast, because the main body portions 26A of the plural bus bars 26 according to the first exemplary embodiment, excluding the connection terminals 26B, are embedded in the lid part 24, insulation between the bus bars 26 is assured. Therefore, there is no need to provide wide gaps between the battery cells 30 (and the battery cells 30 may be disposed closer to one another). Therefore, the size of the battery pack 20 may be reduced, at least in the left-and-right direction.

The connection terminals 26B of each bus bar 26 are electrically connected to the adjacent positive electrode terminal 30A and negative electrode terminal 30B of the plural battery cells 30 via the respective bonding tabs 34, and the connection terminals 26B are formed with sizes that do not extend outside the bonding tabs 34. Therefore, insulation between the positive electrode terminals 30A of the adjacent battery cells 30 and between the negative electrode terminals 30B of the adjacent battery cells 30, and insulation between the positive electrode terminal 30A and negative electrode terminal 30B of the same battery cell 30, may be more excellently assured than in a structure in which the connection terminals 26B of the bus bars 26 extend outside the bonding tabs 34.

The main body portions 26A of the bus bars 26 embedded in the lid part 24 are separated from the upper face of the lid part 24 and the side faces of the lid part 24 by at least twice the thickness of the main body portions 26A. Therefore, insulation between the positive electrode terminals 30A of the adjacent battery cells 30 and between the negative electrode terminals 30B of the adjacent battery cells 30, and insulation between the positive electrode terminal 30A and negative electrode terminal 30B of the same battery cell 30, may be more excellently assured than in a structure in which the main body portions 26A of the bus bars 26 embedded in the lid part 24 are separated from the upper face of the lid part 24 or the side faces of the lid part 24 by around the thickness of the main body portions 26A.

**In** the first exemplary embodiment, the adjacent battery cells 30 are connected to one another by the bus bars 26. However, the battery cells 30 need not necessarily be adjacent to one another. For example, alternate battery cells 30 may be connected to one another. Whatever the arrangement, limitations on layout due to the bus bars 26 may be relaxed compared to a structure in which the lid part 24 of the battery case 22 and the bus bars 26 are separate bodies.

### = Second Exemplary Embodiment =

Now, a second exemplary embodiment is described. Portions that are the same as in the first exemplary embodiment are assigned the same reference symbols and detailed descriptions thereof (including operations that are the same) are omitted as appropriate.

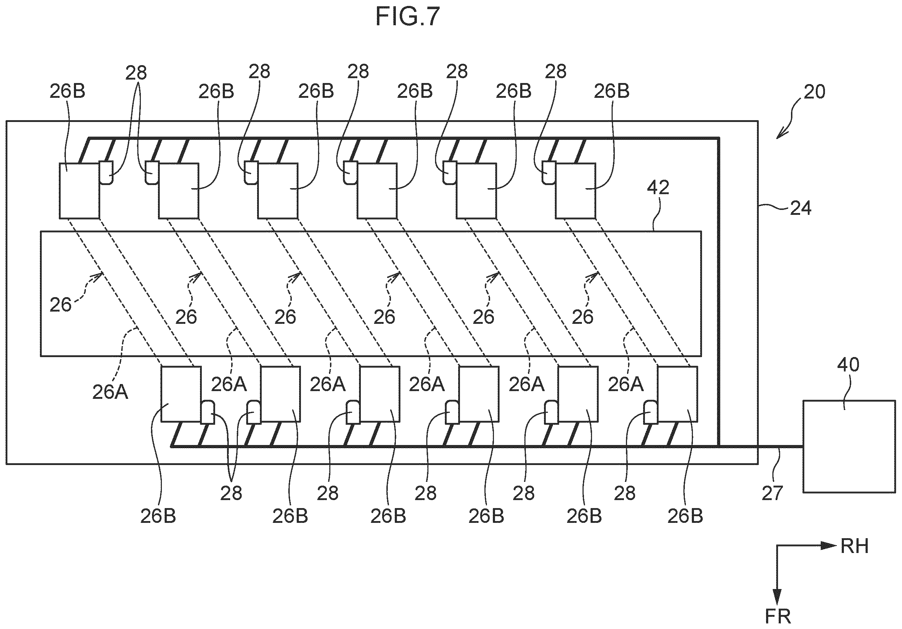

As illustrated in Fig. 7, the second exemplary embodiment differs from the first exemplary embodiment described above in that a thermal conduction sheet 42 is provided at the inner face of the lid part 24, except at locations where the connection terminals 26B are exposed, to serve as a heat conducting member. The thermal conduction sheet 42 is put into contact with upper faces of the plural battery cells 30 between the positive electrode terminals 30A and the negative electrode terminals 30B.

The thermal conduction sheet 42 is a sheet fabricated of a resin that is electrically insulative but dissipates heat, for example, a silicone resin, an acrylic resin or the like. **In** bottom view, the thermal conduction sheet 42 is formed in a substantially rectangular plate shape with a size capable of covering all of the main body portions 26A of the bus bars 26. Because this thermal conduction sheet 42 is provided at the inner face of the lid part 24, heat dissipation from the battery cells 30 may be improved compared to a structure in which the thermal conduction sheet 42 is not provided.

The thermal conduction sheet 42 may be provided so as to extend across upper faces of the battery cells 30 arrayed in the thickness direction instead of at the inner face of the lid part 24. However, assembly of the battery pack 20 is easier if the thermal conduction sheet 42 is provided at the inner face of the lid part 24. Thermal conductivity of the battery pack 20 according to the first exemplary embodiment or the second exemplary embodiment is from 0.4 to 398 W/m·K.

### = Third Exemplary Embodiment =

Now, a third exemplary embodiment is described. Portions that are the same as in the first exemplary embodiment are assigned the same reference symbols and detailed descriptions thereof (including operations that are the same) are omitted as appropriate.

As illustrated in Fig. 8, the third exemplary embodiment differs from the first exemplary embodiment described above in that plural battery modules 44 are formed instead of the plural battery cells 30. Each battery module 44 is formed by a plural number of the battery cells 30 being electrically connected. The battery modules 44 shown in the drawing are each formed by two of the battery cells 30 being electrically connected by a bus bar 25.

Three of the battery modules 44 are accommodated in the battery case 22 of the battery pack 20 shown in Fig. 8. Positive electrode terminals (not shown in the drawing) and negative electrode terminals (not shown in the drawing) of the battery modules 44 are electrically connected to the connection terminals 26B of the bus bars 26 exposed from the inner face of the lid part 24. Thus, the battery pack 20 in which the plural battery modules 44 are accommodated in the battery case 22 instead of the plural battery cells 30 may also provide the same operational effects as the first exemplary embodiment.

### = Fourth Exemplary Embodiment =

Now, a fourth exemplary embodiment is described. Portions that are the same as in the first exemplary embodiment are assigned the same reference symbols and detailed descriptions thereof (including operations that are the same) are omitted as appropriate.

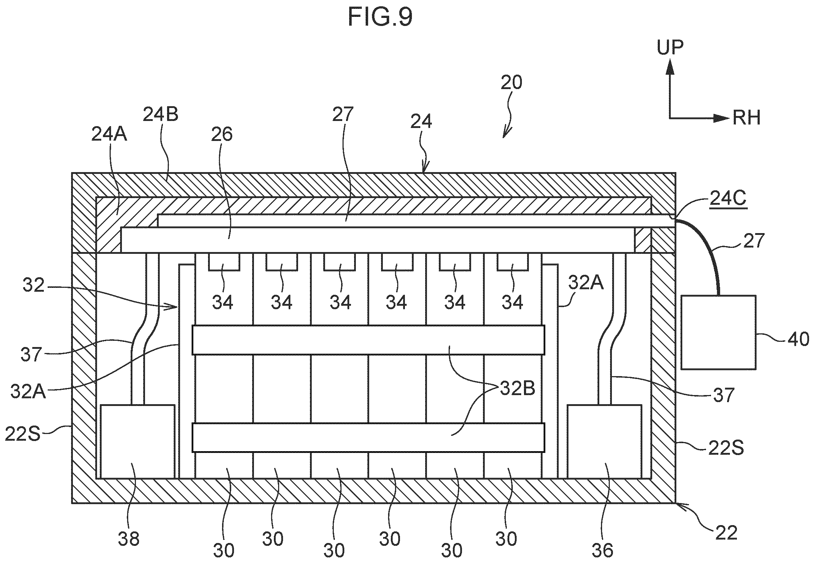

As illustrated in Fig. 9, the fourth exemplary embodiment differs from the first exemplary embodiment described above in that the lid part 24 is structured with a lid part main body 24A and an exterior portion 24B. The lid part main body 24A includes the inner face that opposes the plural battery cells 30. The exterior portion 24B is formed of a resin material (for example, polybutylene terephthalate or the like) with higher strength than a resin material forming the lid part main body 24A (for example, a polyamide or the like). The exterior portion 24B covers at least one face of a plurality of faces of the lid part main body 24A except for the inner face.

The bus bars 26, detection line 27 and thermostats 28 are embedded in the lid part main body 24A. A portion of the detection line 27 is fed out to outside the exterior portion 24B through a hole portion 24C formed in a side wall of the exterior portion 24B and is electrically connected to the detector 40. The upper face (outer face) of the exterior portion 24B is in contact with the cooler 18 under a predetermined pressure force over an entire area of the upper face.

When the exterior portion 24B of this lid part 24 is formed of the high-strength resin material with higher strength than the lid part main body 24A, rigidity of the lid part 24 may be improved and warping of the lid part 24 may be more effectively suppressed or prevented. Therefore, even if the thickness of the lid part 24 is reduced, a deficiency of strength or deficiency of sealing of the lid part 24 may be suppressed or prevented.

Instead of a high-strength resin material, the exterior portion 24B of the lid part 24 may be formed using a heat-resistant resin material with higher heat resistance than the lid part main body 24A. Further, instead of a high-strength resin material, the exterior portion 24B of the lid part 24 may be formed of a metal material with higher thermal conductivity than a resin layer formed of the high-strength resin material.

### = Fifth Exemplary Embodiment =

Now, a fifth exemplary embodiment is described. Portions that are the same as in the first exemplary embodiment are assigned the same reference symbols and detailed descriptions thereof (including operations that are the same) are omitted as appropriate.

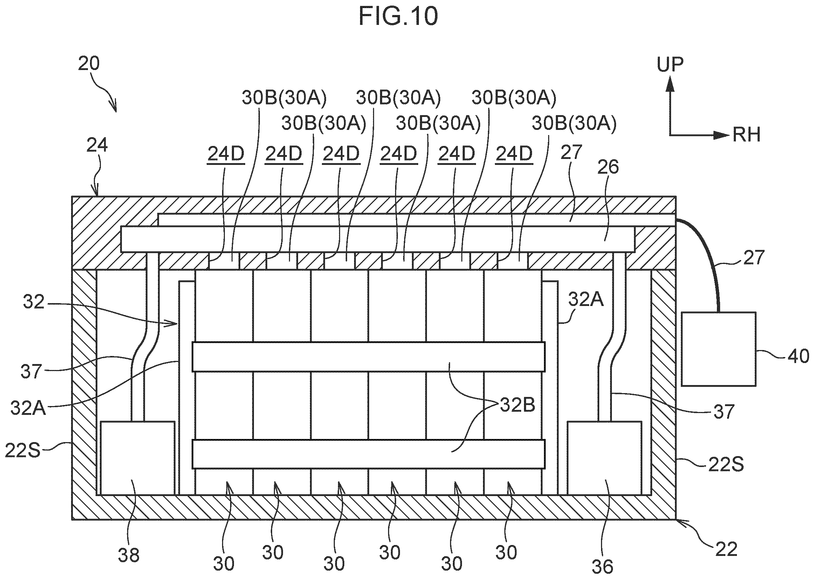

As illustrated in Fig. 10, the fifth exemplary embodiment differs from the first exemplary embodiment described above in that the bus bars 26 are wholly embedded in the lid part 24 and in the shapes of the electrode terminals of the battery cells 30. That is, the connection terminals 26B of the bus bars 26 are embedded in the lid part 24 in addition to the main body portions 26A. At least a portion of each connection terminal 26B is exposed to the inner face side of the lid part 24 by a hole portion 24D with a predetermined depth that is formed in the lid part 24.

Meanwhile, the bonding tabs 34 are not provided at the positive electrode terminals 30A and negative electrode terminals 30B of the battery cells 30. The positive electrode terminals 30A and negative electrode terminals 30B respectively project to predetermined heights towards the upper side. The positive electrode terminals 30A and negative electrode terminals 30B of the battery cells 30 are inserted into the corresponding hole portions 24D and electrically connected with the connection terminals 26B. The fifth exemplary embodiment with this structure may also provide the same operational effects as the first exemplary embodiment.

Because the positive electrode terminals 30A and negative electrode terminals 30B of the battery cells 30 are inserted into the hole portions 24D, the connections of the positive electrode terminals 30A and negative electrode terminals 30B with the bus bars 26 may be improved, and cooling characteristics of the positive electrode terminals 30A and negative electrode terminals 30B may be improved. In addition, because the hole portions 24D are provided at the lid part 24, positioning of the battery cells 30 during fabrication of the battery pack 20 may be made easier.

### = Sixth Exemplary Embodiment =

Now, a sixth exemplary embodiment is described. Portions that are the same as in the first exemplary embodiment are assigned the same reference symbols and detailed descriptions thereof (including operations that are the same) are omitted as appropriate.

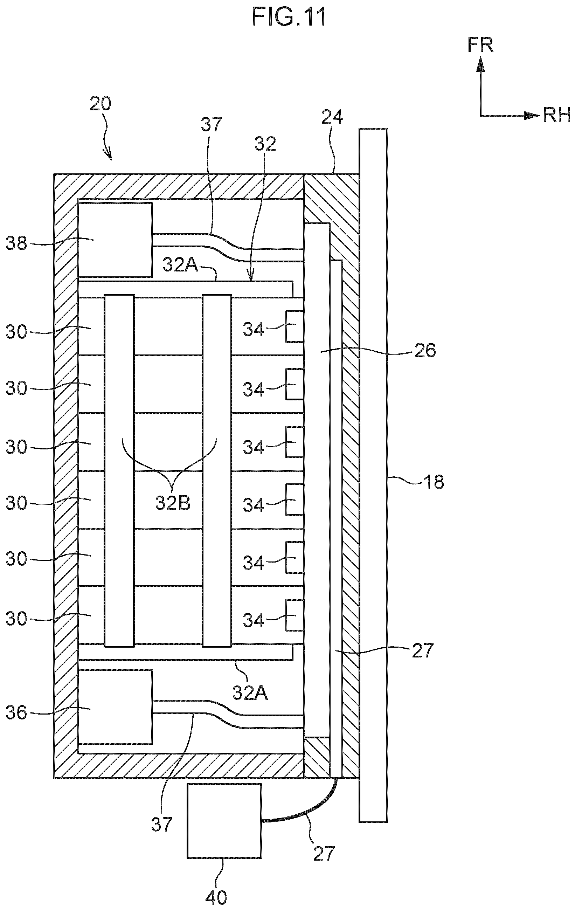

As illustrated in Fig. 11, the sixth exemplary embodiment differs from the first exemplary embodiment described above in that the cooler 18 is disposed at a vehicle width direction outer side, at either the left or right side (the right side in the drawing), with a surface of the cooler 18 that is in contact with the outer face of the lid part 24 facing to the vehicle width direction inner side. In other words, in the sixth exemplary embodiment the battery pack 20 is transversely oriented with the lid part 24 facing to the vehicle width direction outer side (the right side in the drawing).

The sixth exemplary embodiment with this structure may also provide the same operational effects as the first exemplary embodiment. That is, because there is no change in the bus bars 26 being embedded in the lid part 24 of the battery case 22, the outer face of the lid part 24 may be put into contact with the cooler 18 directly. Therefore, cooling efficiency of the battery pack 20 may be improved compared to a structure in which the lid part 24 of the battery case 22 and the bus bars 26 are separate bodies.

### = Seventh Exemplary Embodiment =

Lastly, a seventh exemplary embodiment is described. Portions that are the same as in the first exemplary embodiment are assigned the same reference symbols and detailed descriptions thereof (including operations that are the same) are omitted as appropriate.

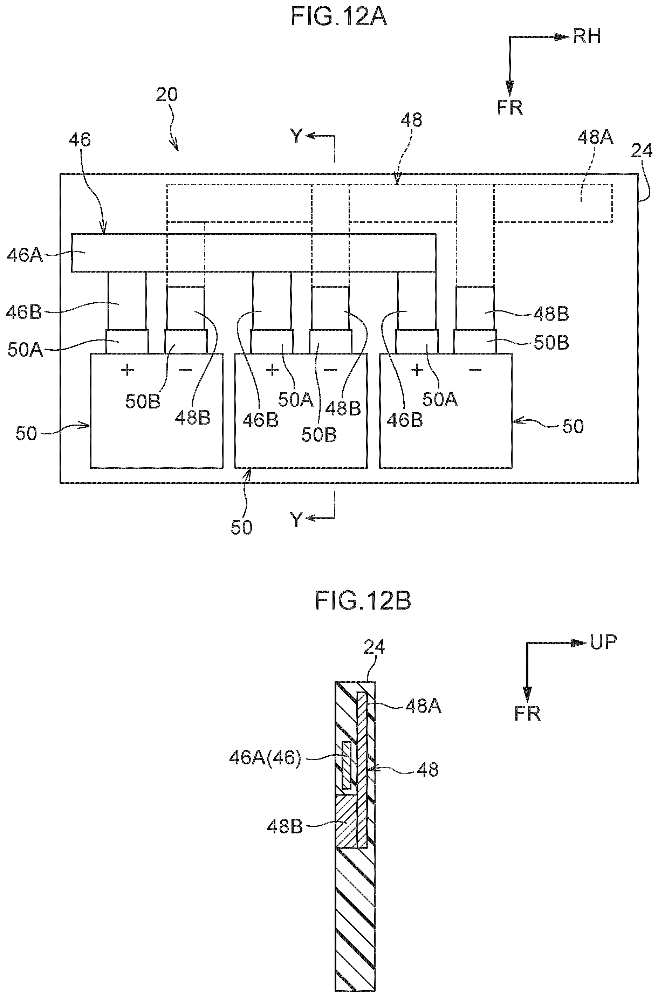

As illustrated in Fig. 12A, the seventh exemplary embodiment differs from the first exemplary embodiment described above in that plural battery cells 50 (for convenience, three are shown in the drawing) are disposed inside the battery case 22, and a bus bar 46 and a bus bar 48 are respectively separately embedded in the lid part 24 (with insulation). At each battery cell 50, a positive electrode terminal 50A and a negative electrode terminal 50B are disposed at the side of the battery cell 50 at which the front-and-rear direction middle of the interior of the battery case 22 is disposed. The bus bar 46 electrically connects the positive electrode terminals 50A with one another and the bus bar 48 electrically connects the negative electrode terminals 50B with one another.

To describe this more specifically, as shown in Fig. 12B, a main body portion 46A of the bus bar 46 that connects the positive electrode terminals 50A with one another is embedded inside the lid part 24 without being exposed to the outside and without gaps. Connection terminals 46B of the bus bar 46 are exposed from the inner face of the lid part 24. Similarly, a main body portion 48A of the bus bar 48 that connects the negative electrode terminals 50B with one another is embedded inside the lid part 24 at a position separated from the bus bar 46. The main body portion 48A is not exposed to the outside and has no gaps. Connection terminals 48B of the bus bar 48 are exposed from the inner face of the lid part 24.

The seventh exemplary embodiment has a structure in which, because the battery cells 50 are aggregated and disposed at one side in the front-and-rear direction of the interior of the battery case 22, the bus bar 46 and the bus bar 48 are aggregated and embedded in the lid part 24 at the other side in the front-and-rear direction. That is, the bus bars 46 and 48 are embedded in a region that is substantially half of the lid part 24 in the front-and-rear direction. Because of this structure in which the bus bars 46 and bus bar 48 are embedded in the lid part 24, even an electrical circuit with complex bus bar shapes may be flexibly managed and realized.

The seventh exemplary embodiment with this structure may also provide the same operational effects as the first exemplary embodiment. That is, because the bus bars 46 and 48 are embedded in the lid part 24 of the battery case 22, heat exchange with the cooler 18 may be conducted efficiently. Therefore, cooling efficiency of the battery pack 20 may be improved compared to a structure in which the lid part 24 of the battery case 22 and the bus bar 46 are separate bodies.

Above, the battery packs 20 according to the present exemplary embodiments have been described on the basis of the attached drawings. However, the battery packs 20 according to the present exemplary embodiments are not limited to the illustrated structures; suitable design modifications may be applied within a scope not departing from the gist of the present disclosure. For example, the battery modules 44 according to the third exemplary embodiment may be applied to the other exemplary embodiments. Further, the detector 40 may be disposed inside the battery case 22.

The bonding tabs 34 need not be provided at the battery cells 30 of the first to fourth and sixth exemplary embodiments. That is, the positive electrode terminal 30A and negative electrode terminal 30B of each battery cell 30 may be in direct contact with and electrically connected to the respective connection terminals 26B of the bus bars 26.

A battery pack may be formed in which plural battery cells (not shown in the drawings) at which positive electrode terminals and negative electrode terminals are provided at lower face sides, separated to front and rear, are accommodated in the battery case 22. In this structure, the bus bars 26 may be similarly embedded in a bottom wall of the battery case 22, and the cooler 18 may be disposed so as to be in contact with a lower face of the bottom wall of the battery case 22 (for example, at an upper face of the flat board portion 16A of the platform 16).

The positive electrode terminal 30A and negative electrode terminal 30B according to the present exemplary embodiments are provided to be separated to front and rear at the side of one face (the upper face) of each battery cell 30, but this is not limiting. For example, when the battery pack 20 is transversely oriented as illustrated in Fig. 11, each battery cell (not shown in the drawings) may be formed with the positive electrode terminal provided at the side of one face and the negative electrode terminal provided at the side of another face, which is at the opposite side of the battery cell from the one face.

In this structure, the bus bars 26 may be similarly embedded in a wall portion at the opposite side of the battery case 22 from the side at which the lid part 24 is disposed (in the first exemplary embodiment, a wall portion corresponding to a floor portion of the battery case 22), and the cooler 18 may be additionally disposed so as to be in contact with the outer face of this wall portion, at the left side in the drawings. In this structure, the cooler 18 may be disposed so as to be in contact with the upper face of the lid part 24 and the like.

## Claims

1. A battery pack (20) comprising:
a plurality of battery cells (30) or a plurality of battery modules (44), each battery cell (30) or battery module (44) including a positive electrode terminal (30A) and a negative electrode terminal (30B);
a battery case (22) accommodating the plurality of battery cells (30) or plurality of battery modules (44);
a lid part (24) formed of an insulator and provided at the battery case (22); and
a bus bar (26) including:
a main body portion (26A) embedded in the lid part (24), and
connection terminals (26B) that are provided at end portions of the main body portion (26A), that are exposed from an inner face of the lid part (24) that opposes the plurality of battery cells (30) or plurality of battery modules (44), and that are electrically connected with a positive electrode terminal (30A) and a negative electrode
terminal (30B) of the plurality of battery cells (30) or plurality of battery modules (44), wherein an outer face of the lid part (24) is in contact with a cooler (18).

2. The battery pack (20) according to claim 1, wherein:
the connection terminals (26A) of the bus bar (26) are electrically connected to the positive electrode terminal (30A) and negative electrode terminal (30B) via respective bonding tabs (34), and
the connection terminals (26B) are formed so as not to extend outside the bonding tabs (34).

3. The battery pack (20) according to claim 1 or claim 2, wherein the main body portion (26A) of the bus bar (26) embedded in the lid part (24) is separated from an outer face of the lid part (24) and side faces of the lid part (24) by at least twice a thickness of the main body portion (26A).

4. The battery pack (20) according to claim 1 or claim 2, further comprising a heat conducting member (42) provided at the inner face of the lid part (24) except at locations where the connection terminals (26B) are exposed, the heat conducting member (42) being in contact with the plurality of battery cells (30) or plurality of battery modules (44).

5. The battery pack (20) according to claim 1 or claim 2, wherein the lid part (24) comprises:
a lid part main body (24A) including the inner face that opposes the plurality of battery cells (30) or plurality of battery modules (44); and
an exterior portion (24B) formed of a high-strength material with higher strength than the lid part main body (24A), the exterior portion (24B) covering at least one face of a plurality of faces of the lid part main body (24A) excluding the inner face.

6. A battery pack (20) comprising:
a plurality of battery cells (30) or a plurality of battery modules (44), each battery cell (30) or battery module (44) including a positive electrode terminal (30A) and a negative electrode terminal (30B);
a battery case (22) accommodating the plurality of battery cells (30) or plurality of battery modules (44);
a lid part (24) formed of an insulator and provided at the battery case (22); and
a bus bar (26) including:
a main body portion (26A) embedded in the lid part (24), and
connection terminals (26B) that are provided at end portions of the main body portion (26A) and embedded in the lid part (24), at least portions of the connection
terminals (26B) being exposed by hole portions (24D) formed in the lid part (24), wherein:
a positive electrode terminal (30A) and a negative electrode terminal (30B) of the plurality of battery cells (30) or plurality of battery modules (44) are inserted into the hole portions (24D) and electrically connected with the connection terminals (26B), and
an outer face of the lid part (24) is in contact with a cooler (18).

7. The battery pack (20) according to claim 1 or claim 6, wherein the outer face of the lid part (24) is in contact with the cooler (18) over an entire area of the outer face.
